# EUROPEAN PATENT APPLICATION

(11) **EP 4 726 337 A1**
(43) Date of publication of application: **15.04.2026**
(21) Application number: 25202804.8
(22) Date of filing: 17.09.2025
(51) Int. Cl.: G01F 1/58, G01F 15/18

(54) **ELECTROMAGNETIC FLOW METER WITH FACILITATED MAINTENANCE**

(30) Priority: 08.10.2024 IT 202400022266
(71) Applicant: Polmac S.R.L., 41037 Mirandola (MO) (IT)
(72) Inventor: POLLASTRI, Giulia, 41037 MIRANDOLA MO (IT)
(74) Representative: Modiano, Micaela Nadia

(57) **Abstract**

An electromagnetic flow meter (1) with facilitated maintenance, which comprises:
- a connecting body (2) provided with a passage duct (3) for a flow of fluid along a flow direction (F) which extends between an intake port (4) and a discharge port (5) which are adapted to be associated in fluid communication with, respectively, a supply duct and a delivery duct;
- an electromagnetic sensing assembly (6), comprising at least one excitation coil (7) for generating an electromagnetic field at the passage duct (3), sensor means (8) for measuring the voltage induced by the electromagnetic field on the flow of fluid in transit and an electronic unit (9) for processing the voltage data item measured by the sensor means (8) in order to obtain a value of the flow rate of the flow of fluid;
- a supporting body (10) for the sensing assembly (6) which is provided with a measurement channel (11) associated with the sensor means (8), the supporting body (10) being reversibly associated in a fluid-tight manner with the connecting body (2) and being adapted to alternatively assume an assembled operating configuration, in which the measurement channel (11) is arranged along the passage duct (3), and a disassembled maintenance configuration.

## Description

The present invention relates to an electromagnetic flow meter with facilitated maintenance.

Electromagnetic flow meters are known, and are commonly used in industrial and agricultural applications to measure the flow rate of conductive fluids.

The operation of such meters is based on the application of Faraday's law of induction. This law states that a conductor placed in a magnetic field produces an electromotive force at its ends which is proportional to the speed with which the conductor cuts the flow lines of the magnetic field. Applying this law to measuring the flow rate of a conductive fluid (a conductor), if the value of the magnetic field applied is known, then by measuring the voltage induced on the fluid itself it is therefore possible to calculate the speed of the flow of the conductive fluid and, if the passage cross-section is known, also its flow rate.

Such meters comprise substantially a main body provided with a measurement conduit of known cross-section through which a flow of conductive fluid transits, and a sensing assembly accommodated inside the main body which comprises an excitation coil powered electrically to generate a magnetic field that passes through the measurement conduit, sensor means for reading the induced voltage, which comprise two facing electrodes inside the conduit proper and an electronic unit for processing the voltage data item so as to obtain a flow rate value to be transmitted to peripheral management units.

The main body is generally connected between two duct parts by means of flanged joints, so that the flow of fluid is channeled along the measurement conduit.

The main body comprises a monolithic shell inside which the measurement conduit and the receptacle for the sensing assembly are defined.

If interventions need to be conducted to inspect the measurement conduit or to carry out maintenance on components of the sensing assembly, it is necessary to remove the entire meter.

In applications wherein the conductive fluid is aggressive or carries impurities, frequent interventions may be required to clean the electrodes in order to ensure reliable metering over time, leading to downtimes and consequent, not insignificant maintenance costs. For this reason such conventional electromagnetic meters are not suitable, or at least not economically advantageous, for use with fluids that tend to rapidly soil the electrodes, such as the fluids used for conventional treatments in the agricultural sector.

Furthermore, in the event of malfunctions of the sensing assembly it is necessary to replace the entire meter.

The aim of the present invention is to provide an electromagnetic flow meter with facilitated maintenance which is capable of improving the known art in one or more of the abovementioned aspects.

Within this aim, an object of the invention is to facilitate operations to inspect or clean the inside of the flow meter, as well as operations to maintain or replace the sensing assembly, so reducing the times and costs of execution and simplifying the operations of workers.

In this manner the flow meter according to the invention is particularly suitable for use with dense, viscous fluids, with particles in suspension or chemically concentrated, such as those typically in use in the agricultural sector.

Another object of the invention is for it to be usable as a substitute for conventional meters without requiring structural modifications or adaptations.

A further object of the present invention is to overcome the drawbacks of the background art in a manner that is alternative to any existing solutions.

Another object of the invention is to provide an electromagnetic flow meter with facilitated maintenance that is highly reliable, easy to implement and at low cost.

This aim and these and other objects which will become more apparent hereinafter are achieved by an electromagnetic flow meter with facilitated maintenance according to claim 1, optionally provided with one or more of the characteristics of the dependent claims.

Further characteristics and advantages of the invention will become more apparent from the detailed description that follows of a preferred, but not exclusive, embodiment of the electromagnetic flow meter with facilitated maintenance according to the invention, which is illustrated by way of non-limiting example in the accompanying drawings wherein:
- Figure 1 is a schematic perspective view of an electromagnetic flow meter with facilitated maintenance according to the invention, in the assembled configuration;
- Figure 2 is a schematic perspective view of the flow meter according to the invention, in the disassembled configuration;
- Figure 3 is a schematic side view of the flow meter of Figure 1;

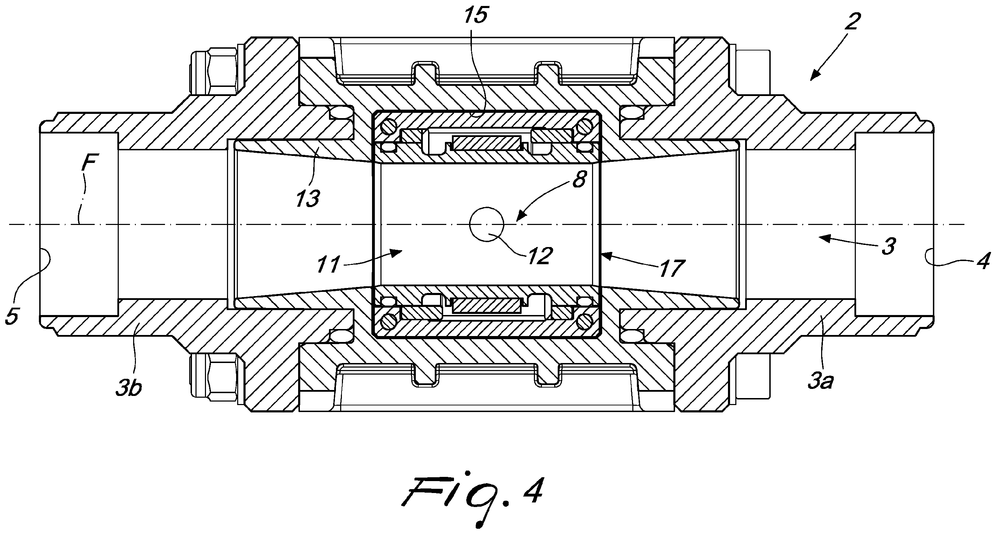

- Figure 4 is a schematic cross-sectional view taken along the line IV-IV in Figure 3;

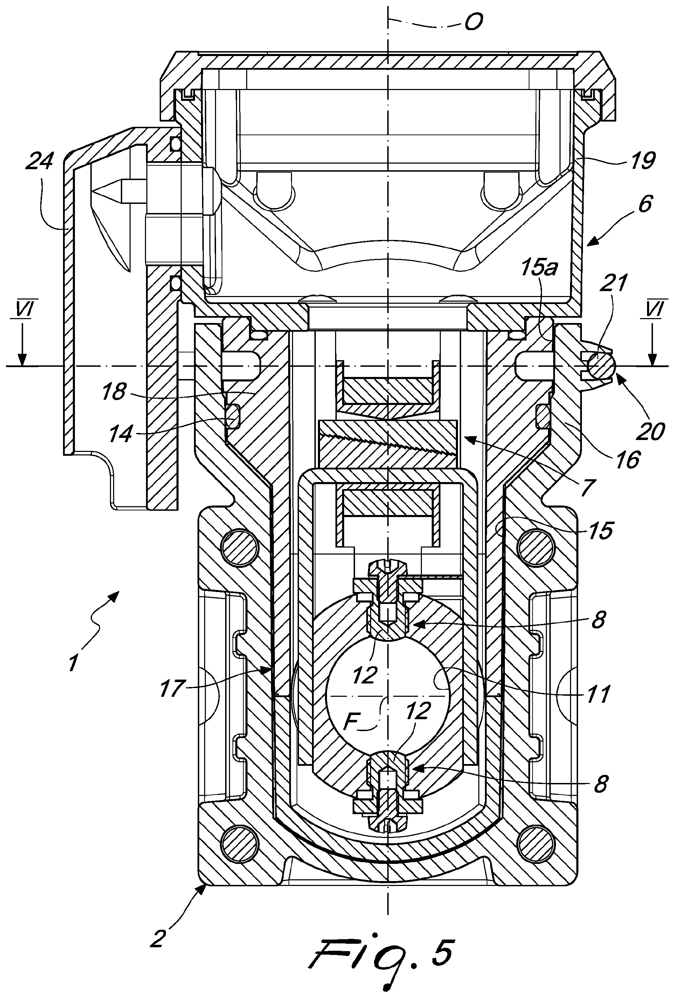

- Figure 5 is a schematic sectional view taken along the line V-V in Figure 3;

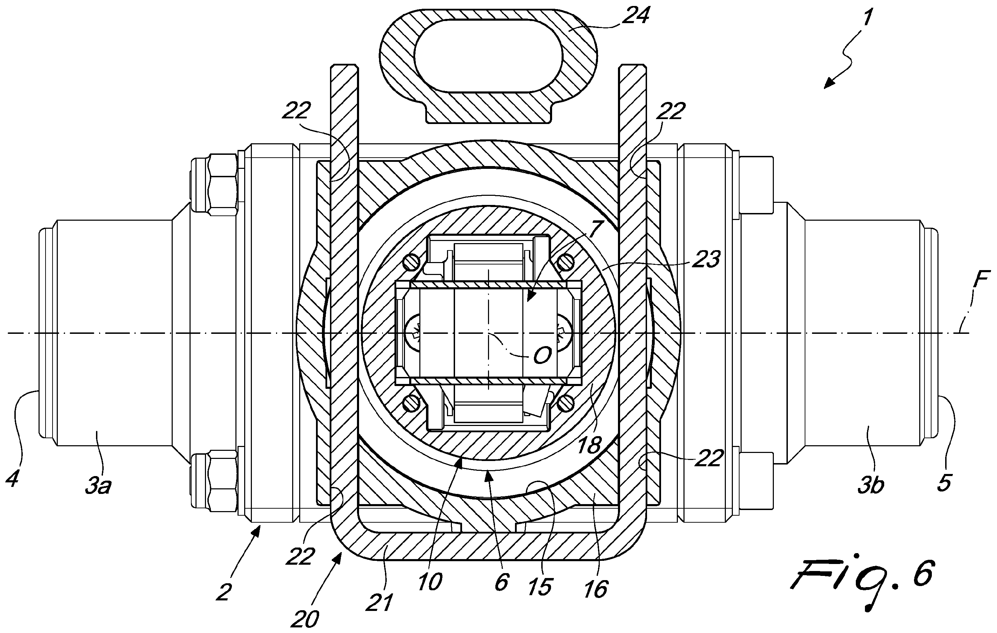

- Figure 6 is a schematic cross-sectional view taken along the line VI-VI in Figure 5.

With reference to the figures, the reference numeral 1 generally designates an electromagnetic flow meter with facilitated maintenance.

The meter 1 is adapted to be used with fluids of conductive type, typically with water-based liquid solutions. In particular, the meter 1 can be used with dense, viscous liquids containing particles in suspension or chemically aggressive liquids, such as those commonly used to execute treatments in the agricultural sector. The materials from which the meter 1 is made must be chemically compatible with the characteristics of the working fluid.

The meter 1 comprises a connecting body 2 provided with a passage duct 3 for a flow of fluid along a flow direction F which extends between an intake port 4 and a discharge port 5 which are adapted, in use, to be associated in fluid communication with, respectively, a supply duct and a delivery duct of an external fluid line, not shown.

The meter 1 further comprises an electromagnetic sensing assembly 6, comprising at least one excitation coil 7 for generating an electromagnetic field at the passage duct 3, sensor means 8 for measuring the voltage induced by the electromagnetic field on the flow of fluid in transit and an electronic unit 9 for processing the voltage data item measured by the sensor means 8 in order to obtain a value of the flow rate of the flow of fluid. The electromagnetic field generated by the passage of current through the coil 7 is substantially perpendicular to the flow direction F along which the flow of fluid passes. The electronic unit 9 is programmed to calculate the flow rate value on the basis of the voltage data item detected using methods of applying Faraday's Law which are known to the person skilled in the art.

In the present description the term "substantially" means "except for the usual machining tolerances and tolerances in the assembly of the components".

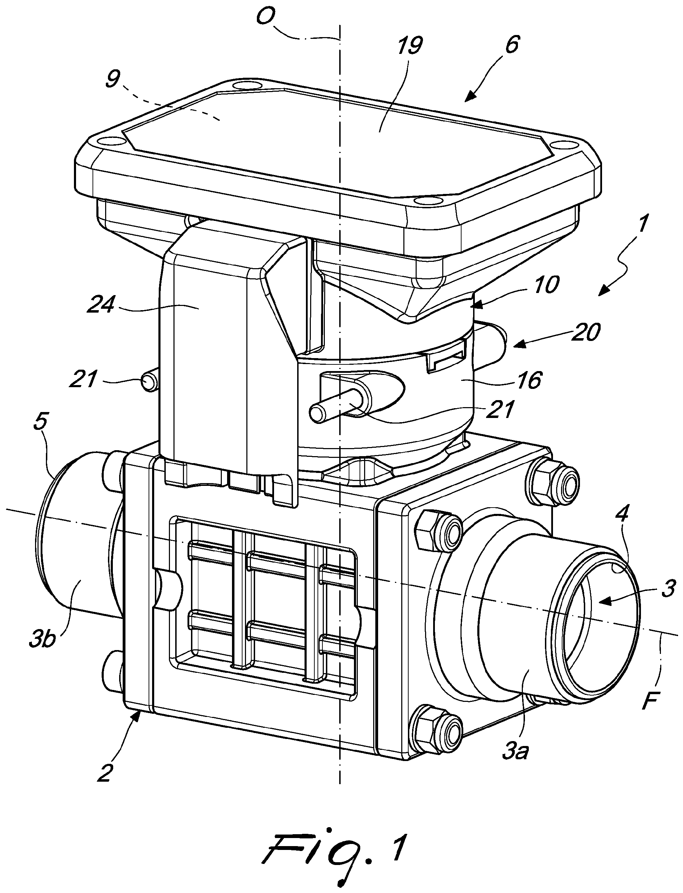

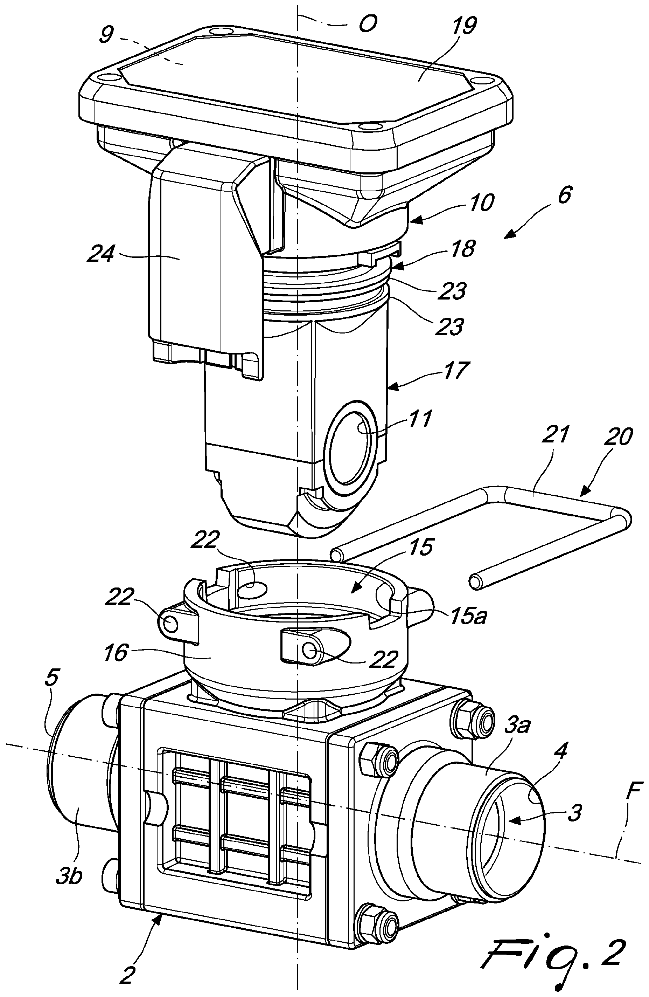

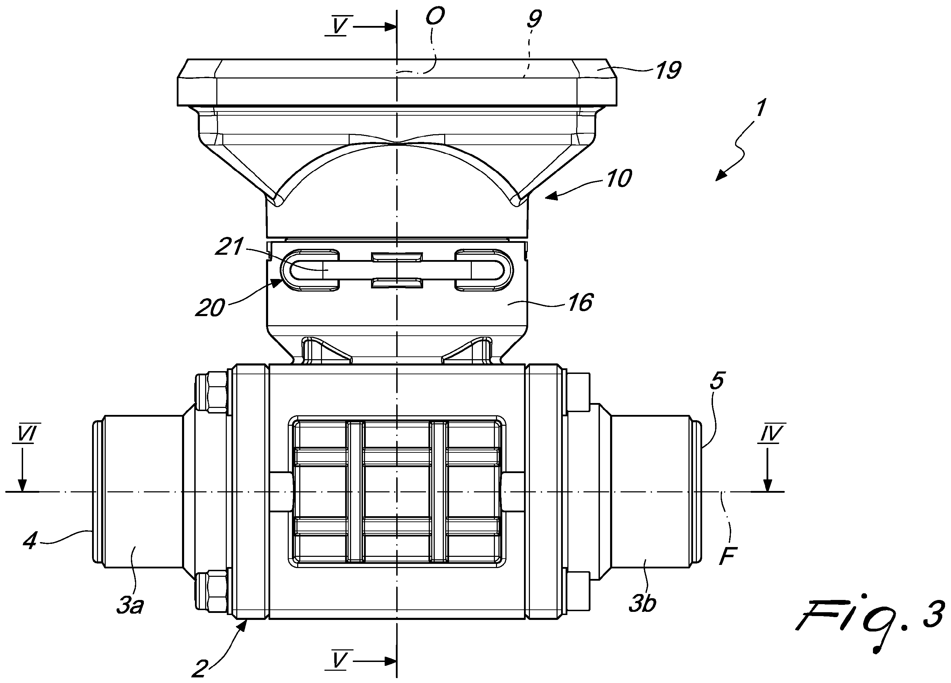

According to the invention the meter 1 comprises a supporting body 10 for the sensing assembly 6 which is provided with a measurement channel 11 associated with the sensor means 8. Such sensor means 8 comprise typically a pair of facing electrodes 12 inside the measurement channel 11 and arranged on diametrically opposing sides of that channel. The supporting body 10 is reversibly associated in a fluid-tight manner with the connecting body 2 and is adapted to alternatively assume an assembled operating configuration (Figures 1 and 3), in which the measurement channel 11 is arranged inside the passage duct 3 and aligned therewith, and a disassembled maintenance configuration (Figure 2). In the disassembled configuration the supporting body 10 of the sensing assembly 6 is extracted from the connecting body 2 so as to be able to execute any maintenance intervention, while leaving the connecting body connected to the supply duct and the delivery duct. In this manner the meter 1 according to the invention combines the typical advantage of electromagnetic flow meters, of having no moving parts in contact with the working fluid, with a considerable practicality and speed of maintenance, so being suitable for use with dense, viscous liquids containing particles in suspension or chemically aggressive liquids, such as the fluids commonly used for executing treatments in the agricultural sector.

Preferably the cross-sections of the passage duct 3 and the measurement channel 11, transverse to the flow direction F, are substantially circular, but alternative embodiments are not ruled out.

More precisely, in the assembled configuration the measurement channel 11 is interposed between an intake portion 3a and a discharge portion 3b of the passage duct 3 along the flow direction F. The intake portion 3a extends from the intake port 4 along the flow direction F. The discharge portion 3b ends with the discharge port 5 along the flow direction F.

Usefully the transverse cross-sections of the measurement channel 11 and of the passage duct 3 are substantially blended seamlessly, so as not to create points of discontinuity in the flow of fluid in order to optimize the reliability of the measurement obtained.

Along the flow direction F, the transverse cross-section of the intake portion 3a has a constriction region upstream of the measurement channel 11 and the transverse cross-section of the discharge portion 3b has an expansion region downstream of that channel. These constriction and expansion regions are defined by a contoured insert 13 accommodated inside the connecting body 2 to define the central portion of the passage duct 3.

The transverse cross-section of the measurement channel 11 is substantially constant along its longitudinal extension along the flow direction F.

The connecting body 2 comprises a receptacle 15 for the sensing assembly 6 connected to the passage duct 3 and substantially transverse thereto. Such receptacle 15 is provided with one outwardly-open end 15a, defined by a collar 16, for introducing and extracting the sensing assembly 6 along an operating direction O which is substantially transverse, preferably perpendicular, to the flow direction F.

The sensing assembly 6 has a substantially linear extension along the operating direction O and comprises, in order:
- a cartridge element 17 comprising the measurement channel 11 with the electrodes 12, which is adapted to be inserted in the receptacle 15,
- a sleeve 18 inside which the coil 7 is positioned, and which is arranged at the collar 16,
- a head 19 located outside the supporting body 10 for accommodating the electronic unit 9.

Preferably the sensing assembly 6 also comprises electrical connector means 24 for connecting to an electric power source of the coil 7 and/or of the electronic unit 9. Such electrical connector means 24 protrude outside the head 19.

The meter 1 comprises sealing elements 14 interposed between the connecting body 2 and the supporting body 10 in the assembled configuration. Such sealing elements 14 consist of one or more conventional annular gaskets, interposed between the collar 16 and the sleeve 18.

Furthermore, the meter 1 comprises reversible clamping means 20 for locking the connecting body 2 and the supporting body 10 in the assembled configuration.

In the embodiment shown, such reversible clamping means 20 comprise a forked element 21 in which the respective prongs have their end portions inserted in corresponding holes 22 defined on the collar 16 and their central portions engaged between corresponding profiles in relief 23 which protrude outside the sleeve 18.

In the event it is necessary to intervene to inspect/clean the measurement channel 11 or the sensor means 8 or to execute repair/replacement operations on the sensing assembly 6, it is possible to remove the forked element 21 in order to extract the supporting body 10, which supports the assembly proper, from the connecting body 2, without needing to dismount the latter from its seat.

In practice it has been found that the invention fully achieves the intended aim and objects by providing an electromagnetic flow meter with facilitated maintenance that makes it possible to rapidly and easily execute interventions for inspection, cleaning, repair and replacement, so as to reduce downtimes for the applications in which it is used, so being suitable for use also with dense, viscous liquids containing particles in suspension or chemically aggressive liquids, such as the fluids commonly used for executing treatments in the agricultural sector.

The invention thus conceived is susceptible of numerous modifications and variations, all of which are within the scope of the appended claims. Moreover, all the details may be substituted by other, technically equivalent elements.

In practice, the materials used, as well as the contingent shapes and dimensions, may be any according to the requirements and to the state of the art.

The disclosures in Italian Patent Application No. 102024000022266 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An electromagnetic flow meter (1) with facilitated maintenance, comprising:
- a connecting body (2) provided with a passage duct (3) for a flow of fluid along a flow direction (F) which extends between an intake port (4) and a discharge port (5) which are adapted to be associated in fluid communication with, respectively, a supply duct and a delivery duct, and
- an electromagnetic sensing assembly (6), comprising at least one excitation coil (7) for generating an electromagnetic field at said passage duct (3), sensor means (8) for measuring the voltage induced by the electromagnetic field on the flow of fluid in transit and an electronic unit (9) for processing the voltage data item measured by said sensor means (8) in order to obtain a value of the flow rate of the flow of fluid,
**characterized in that** it comprises a supporting body (10) for said sensing assembly (6) which is provided with a measurement channel (11) associated with said sensor means (8), the supporting body (10) being reversibly associated in a fluid-tight manner with said connecting body (2) and being adapted to alternatively assume an assembled operating configuration, in which the measurement channel (11) is arranged along the passage duct (3), and a disassembled maintenance configuration.

2. The meter (1) according to claim 1, **characterized in that** said measurement channel (11) is interposed between an intake portion (3a) and a discharge portion (3b) of said passage duct (3) along the flow direction (F).

3. The meter (1) according to claim 1 or 2, **characterized in that** the transverse cross-sections of said measurement channel (11) and of said passage duct (3) are substantially blended seamlessly.

4. The meter (1) according to claim 2, **characterized in that** along the flow direction (F) the transverse cross-section of the intake portion (3a) of said passage duct (3) has a constriction region upstream of said measurement channel (11) and the transverse cross-section of the discharge portion (3b) of said passage duct (3) has an expansion region downstream of said measurement channel.

5. The meter (1) according to one or more of the preceding claims, **characterized in that** the transverse cross-section of said measurement channel (11) is substantially constant along its longitudinal extension along the flow direction (F).

6. The meter (1) according to one or more of the preceding claims, **characterized in that** it comprises sealing elements (14) interposed between said connecting body (2) and said supporting body (10) in the assembled configuration.

7. The meter (1) according to claim 1, **characterized in that** it comprises reversible clamping means (20) for locking said connecting body (2) and said supporting body (10) in the assembled configuration.

8. The meter (1) according to claim 1, **characterized in that** said connecting body (2) comprises a receptacle (15) extending along an operating direction (O) which is substantially transverse to the flow direction (F), communicates with said passage duct (3), and is provided with an outwardly-open end (15a).

9. The meter (1) according to claim 1, **characterized in that** said electromagnetic sensing assembly (6) comprises electrical connector means (24) for connection to an electric power supply of said excitation coil (7) and/or of said electronic unit (9).
